# EUROPÄISCHE PATENTSCHRIFT

(11) **EP 0 569 022 B1**
(45) Veröffentlichungstag und Bekanntmachung des Hinweises auf die Patenterteilung: **14.08.1996**
(21) Anmeldenummer: 93107403.3
(22) Anmeldetag: 07.05.1993
(51) Int. Cl.: B60N 3/02

(54) **Klappgriff mit einem Griffbügel, der an einen Lagerbock schwenkbar angelenkt ist**
Tiltable grip with grab handle, pivotably mounted on a bearing support
Poignée basculable à étrier, montée de manière pivotante sur un support de palier

(30) Priorität: 08.05.1992 DE 9206176 U
(43) Veröffentlichungstag der Anmeldung: 10.11.1993
(73) Patentinhaber: Utescheny - Endos GmbH, D-75059 Zaisenhausen (DE)
(72) Erfinder: Utescheny, Ralf, W-7519 Zaisenhausen (DE); Richter, Rolf, W-6920 Sinsheim-Weiler (DE)
(74) Vertreter: Clemens, Gerhard, Dr.-Ing.

(56) Entgegenhaltungen:
- EP-A- 0 507 082
- EP-A- 0 523 359
- DE-A- 3 513 293
- DE-U- 9 206 175
- DE-U- 9 206 176
- DE-U- 9 213 972

## Beschreibung

Die Erfindung betrifft einen Klappgriff mit einem Griffbügel, der an einen an einer Montagewand montierbaren Lagerbock schwenkbar angelenkt ist und gegen die Kraftwirkung einer Rückstellfeder aus seiner an den Lagerbock angelehnten Ruhestellung in eine, vom Lagerbock um einen durch Anschlag begrenzten Griffwinkel, Funktionsstellung abschwenkbar ist.

Solche Klappgriffe sind als Haltegriffe in Fahrzeugen bekannt und werden dort an den im wesentlichen aufrechten Seitenrändern des Fahrzeugdaches im Fahrgastraum montiert.

Bei einem bekannten Klappgriff dieser Art kann der Griffbügel, wenn er in Funktionsstellung losgelassen wird, unter der Wirkung seiner Rückstellfeder gegen den Lagerbock oder die Montagewand schlagen und dabei störende Geräusche oder Beschädigungen verursachen.

Aufgabe der Erfindung ist es, solche Störgeräusche und/oder Beschädigungen zu vermeiden.

Die Erfindung löst diese Aufgabe dadurch, daß eine Bremsfeder vorgesehen ist, die der Rückstellfeder entgegenwirkend angeordnet ist und in Ruhestellung die Rückstellfeder gerade kompensiert, daß die Ruhestellung um einen Sicherheitswinkel von der Endstellung, in der der Griffbügel am Lagerbock oder an die zugehörige Montagewand anschlägt, abweicht, wobei der Sicherheitswinkel wesentlich kleiner als der Griffwinkel ist, und daß die Bremsfeder nur im Bereich eines Bremswinkels zwischen einer Bremseinsatzstellung und der Endstellung wirksam ist, und zwar zunehmend.

Beim freien Zurückschwenken des Griffbügels aus seiner Funktionsstellung in die Ruhestellung folgt dieser zunächst allein der Kraftwirkung der Rückstellfeder, bis der Griffbügel in den Bereich des Bremswinkels gerät. Dort wird die Bremsfeder wirksam, die der Rückstellkraft der Rückstellfeder entgegenwirkt und diese in der Ruhestellung des Griffbügels ausgleicht. Der Griffbügel schwenkt also stark gebremst in seine Ruhestellung` in der er den Lagerbock und die Montagewand nicht berührt.

Trägheitsbedingt wird der Griffbügel über diese Ruhestellung hinausschwenken und erst dann in die Ruhestellung gelangen. Dabei kann der Griffbügel aber den Lagerbock, bedingt durch den Sicherheitswinkel, nicht berühren, wenn der Sicherheitswinkel entsprechend bemessen ist.

Bewährt haben sich Bemessungen wie folgt:
für den Griffwinkel 60 bis 100^{o} (Grad), vorzugsweise 80^{o}.
für den Bremswinkel 10 bis 15^{o}, vorzugsweise 11^{o}.
für den Sicherheitswinkel zwischen der Endstellung und der Ruhestellung des Griffbügels 3 bis 10^{o}, vorzugsweise 7^{o}.

Vorzugsweise ist wie auch bei dem eingangs beschriebenen bekannten Klappgriff für die beiden Enden des Griffbügels je ein Schwenklager am Lagerbock vorgesehen und es sind zwei Rückstellfedern vorgesehen, die als Schraubenfedern ausgebildet und auf den beiden Schwenklagern zugeordnete Schwenkachsen aufgesteckt sind.

Diese Ausgestaltung ist in verbindung mit der Erfindung deshalb besonders vorteilhaft, weil sie eine sehr einfache wirksame konstruktive Ausgestaltung der Bremsfeder und der Lagerung der Bremsfeder ermöglicht, die dadurch gekennzeichnet ist, daß die beiden Schwenkachsen steif mit dem Griffbügel verbunden sind, daß als Bremsfeder eine Blattfeder vorgesehen ist, die mit ihren beiden Enden an den einander zugekehrten Enden der Schwenkachsen drehsteif befestigt ist, und daß im mittleren Längenbereich der Blattfeder am Lagerbock befestigte Anschläge vorgesehen sind, die dann und nur dann die Schwenkbewegung der Blattfeder behindern, wenn der Griffbügel eine Stellung im Bereich des Bremswinkels einnimmt.

Die Montagewände sind unterschiedlich gestaltet; zum Beispiel wenn es sich um den aufrechten Seitenrand eines Fahrzeugdaches handelt, ist die Krümmung von Fahrzeugmodell zu Fahrzeugmodell unterschiedlich. Ein Klappgriff kann sehr einfach bei der Produktion der jeweiligen Gestaltung der Montagewand dadurch angepaßt werden, daß die Blattfeder in ihrem mit den Anschlägen zusammenwirkenden Bereich eine Verschränkung aufweist, durch deren Ausmaß die Ruhestellung des Griffbügels der Krümmung der Montagewand entsprechend voreinstellbar ist.

Für die Anpassung genügt es, eine Blattfeder einzusetzen, die eine entsprechend ausgestaltete Verschränkung hat. Im übrigen können die Klappgriffe für die verschiedenen Fahrzeugtypen identisch ausgebildet sein, was der Massenproduktion entgegenkommt.

Die Erfindung ist bevorzugt anwendbar wie für den eingangs beschriebenen Klappgriff dort angegeben, sie ist aber nicht auf diese Anwendung beschränkt.

Die Erfindung wird nun anhand der beigefügten Zeichnung näher erläutert.

In der Zeichnung zeigt:
- Figur 1: einen Klappgriff mit dem Griffbügel in Ruhestellung, gesehen aus Richtung der Montagewand,
- Figur 2: den Schnitt II aus Figur 1, jedoch in Funktionsstellung des Griffbügels,
- Figur 3: den Teilschnitt III aus Figur 1, jedoch den Griffbügel etwas hochgeschwenkt gegenüber der Funktionsstellung,
- Figur 4: den Ausschnitt IV aus Figur 3 vergrößert,
- Figur 5: die Teile aus Figur 3 in einer Stellung des Griffbügels in Bremseinsatzstellung,
- Figur 6: den Ausschnitt VI aus Figur 5 vergrößert,
- Figur 7: die Teile aus Figur 3 in Ruhestellung des Griffbügels,
- Figur 8: den Ausschnitt VIII aus Figur 7 und
- Figur 9: die Blattfeder allein perspektivisch vergrößert skizziert.

In der Zeichnung ist mit 1 ein U-förmiger Griffbügel bezeichnet, der mit seinen beiden Enden 2 und 3 in Schwenklagern 4 und 5 eines allgemein mit 6 bezeichneten Lagerbocks schwenkbar um die Achse 7 gelagert ist.

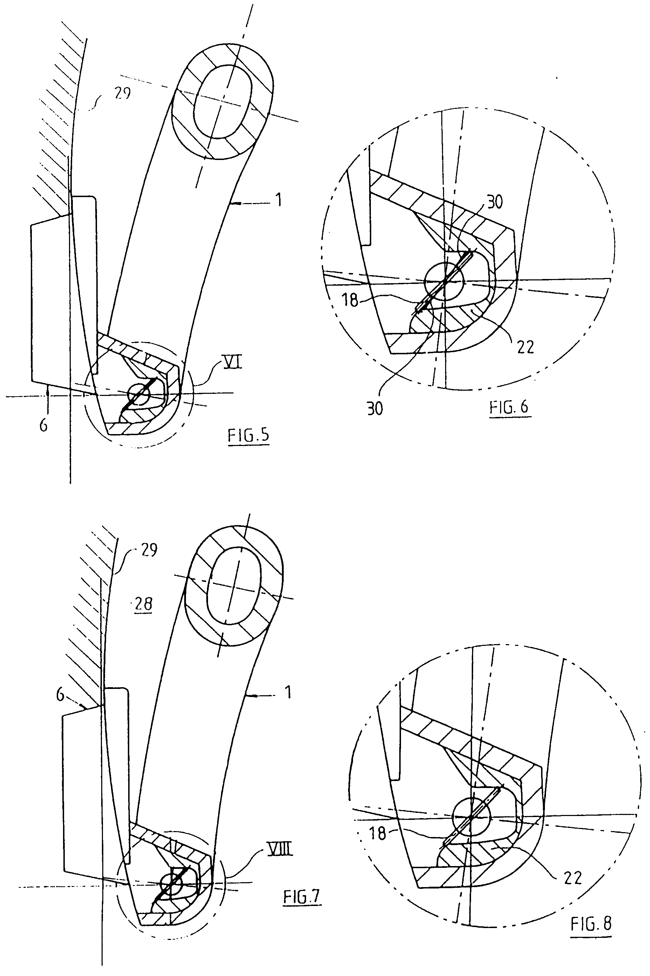

Der Lagerbock 6 ist teilweise versenkt an der Montagewand 19 verschraubt oder anderweitig befestigt in einer Stellung, so daß, wie aus Figur 7 ersichtlich, in Ruhestellung 14 des Griffbügels dieser nach oben weist und die Achse 7 sich horizontal erstreckt. Andere Orientierungen bei der Montage sind möglich.

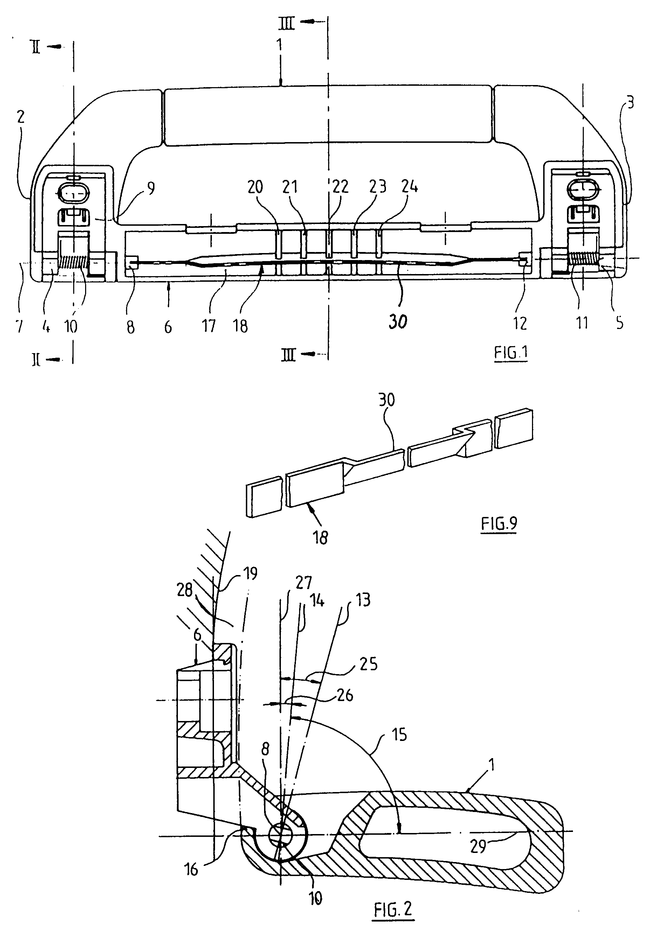

Am Ende 4 des Griffbügels 1 ist, wie aus Figur 2 ersichtlich, koaxial zur Achse 7, eine Schwenkachse 8 drehsteif befestigt. Diese Schwenkachse 8 ist in einem Lagerstück 9 des Lagerbocks 6 schwenkbar gelagert, und zwar gegen die Kraftwirkung einer als Rückstellfeder wirkenden Schraubenfeder 10, die auf die Schwenkachse 8 aufgesteckt ist und am Lagerbock einerseits und am Griffbügel andererseits abgestützt ist. Die Rückstellfeder hat das Bestreben, den Griffbügel in die in Figur 7 gezeigte Ruhestellung zu schwenken. Eine entsprechende und parallel wirkende zweite Rückstellfeder 11 ist auf der anderen Seite vorgesehen und entsprechend auf eine mit dem Griffbügel drehsteife Schwenkachse 12 gesteckt.

Der Klappgriff ist im wesentlichen spiegelsymmetrisch zur Schnittebene III ausgebildet.

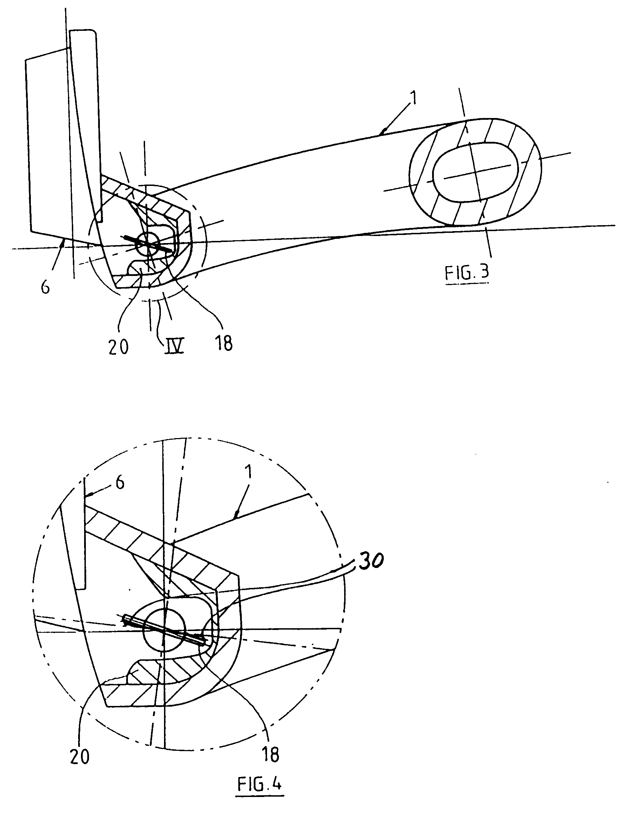

Der Klappgriff kann gegen die Kraftwirkung der Rückstellfedern 10, 11 um einen Griffwinkel 15 von 80^{o} in die in Figur 2 und 3 gezeichnete Funktionsstellung 29 geschwenkt werden, in der er sich gegen weiteres Schwenken durch je einen an beiden Enden des Griffbügels vorgesehenen Anschlag am Lagerbock 6 abstützt. Der eine dieser Anschläge ist in Figur 2 sichtbar und mit 16 bezeichnet.

Die beiden Schwenkachsen 8 und 12 ragen mit ihren einander zugekehrten Enden in eine Kammer 17 des Lagerbocks 6. Zwischen den beiden Enden ist drehsteif eine Blattfeder 18 befestigt, die als Bremsfeder dient. Diese Blattfeder ist spiegelsymmetrisch zur Schnittebene III verschränkt. Die Verschränkung 30 erstreckt sich über den mittleren Längenbereich der Blattfeder 18, der mit den Anschlägen 20 bis 24 zusammenwirkt. Durch das Ausmaß der Verschränkung wird die Position der Ruhestellung bestimmt. Durch Einsatz einer Blattfeder mit einer anderen Verschränkung gewinnt man einen Griffbügel mit einer anders gelegenen Ruhestellung und ist auf diese Weise in der Lage, durch Wahl der geeignet verschränkten Blattfeder bereits bei der Montage den Klappgriff hinsichtlich seiner Ruhestellung den geometrischen Bedingungen der Montagewand anzupassen.

Die Verschränkung 30 ist in Figur 1, 7 und 8 zurückgebogen durch die Kraftwirkung der beiden Schraubenfedern 10 und 11, die im mittleren Bereich der Blattfeder diese gegen vorgesehene Anschlagrippen 20 bis 24 pressen. Dadurch wird eine Gegenkraft der Blattfeder hervorgerufen, die gegen die Rückstellkraft der Rückstellfedern 10 und 11 wirkt und diese in der Ruhestellung des Klappgriffs gerade ausgleicht beziehungsweise kompensiert.

Die Anschlagrippen 20 bis 24 sind wie die Rippe 22 geformt, die aus Figur 4, 6 und 8 sichtbar ist. In dem Winkelbereich zwischen der in Figur 2 und 3 gezeigten Funktionsstellung 29 und der in Figur 5 gezeigten Bremseinsatzstellung 13 sind, wie aus Figur 4 ersichtlich, die Anschlagrippen 20 bis 24 unwirksam und die Blattfeder 18 kann keinerlei Drehkräfte auf den Griffbügel 1 ausüben. Im Bereich des Bremswinkels 25 zwischen der Bremseinsatzstellung 13 und der Endstellung 27 lehnt sich die Blattfeder 18 zunehmend an die Anschlagrippen 20 bis 24 an und wirkt zunehmend der Rückstellkraft der Schraubenfedern 10 und 11 entgegen. In der Ruhestellung 14 gleicht die Bremskraft der Blattfeder 18 die Rückstellkraft der Schraubenfedern 10 und 11 aus. Der Bremswinkel 25 zwischen der Bremseinsatzstellung 13 und der Endstellung 27 beträgt 11^{o}. In der Endstellung 27, die in Figur 2 strichpunktiert angedeutet ist, berührt der Griffbügel 1 den Lagerbock 6. Ein Sicherheitswinkel 26 zwischen der Endstellung 27 und der Ruhestellung 14 ist mit 7^{o} so groß gewählt, daß der Griffbügel 1, wenn er aus der Funktionsstellung 29 losgelassen wird, die Endstellung 27 nicht erreichen kann. Er schwingt vielmehr irgendwo im Bereich des Sicherheitswinkels 26 aus und dann zurück in seine Ruhestellung 14.

Die sich ergebende Ruhestellung gemäß Figur 7 läßt auch einen Spalt 28 zwischen Griffbügel und Montagewand 19 frei, durch den die Bedienungsperson, die den in Ruhestellung befindlichen Klappgriff greifen will, bequem mit ihren Fingern den Griffbügel umfassen kann.

## Patentansprüche

1. Klappgriff mit einem Griffbügel, der an einen an einer Montagewand montierbaren Lagerbock schwenkbar angelenkt ist und gegen die Kraftwirkung einer Rückstellfeder aus seiner an den Lagerbock angelehnten Ruhestellung in eine, vom Lagerbock um einen durch Anschlag begrenzten Griffwinkel, Funktionsstellung abschwenkbar ist, dadurch gekennzeichnet,
daß eine Bremsfeder ( 18 ) vorgesehen ist, die der Rückstellfeder ( 10, 11 ) entgegenwirkend angeordnet ist und in Ruhestellung ( 14 ) die Rückstellfeder ( 10, 11 ) gerade kompensiert,
daß die Ruhestellung ( 14 ) um einen Sicherheitswinkel ( 26 ) von der Endstellung ( 27 ), in der der Griffbügel ( 1 ) am Lagerbock ( 6 ) oder an die zugehörige Montagewand ( 19 ) anschlägt, abweicht, wobei der Sicherheitswinkel ( 26 ) wesentlich kleiner als der Griffwinkel ( 15 ) ist, und
daß die Bremsfeder ( 18 ) nur im Bereich eines Bremswinkels ( 25 ) zwischen einer Bremseinsatzstellung ( 13 ) und der Endstellung ( 27 ) wirksam ist, und zwar zunehmend.

2. Klappgriff nach Anspruch 1, dadurch gekennzeichnet,
daß der Griffwinkel ( 15 ) 60 bis 100^{o} (Grad), vorzugsweise 80^{o}, groß ist.

3. Klappgriff nach einem der vorhergehenden Ansprüche, dadurch gekennzeichnet,
daß der Bremswinkel ( 25 ) 10 bis 25^{o}, vorzugsweise 11^{o}, groß ist.

4. Klappgriff nach einem der vorhergehenden Ansprüche, dadurch gekennzeichnet,
daß der Sicherheitswinkel ( 26 ) zwischen der Endstellung ( 27 ) und der Ruhestellung ( 14 ) des Griffbügels ( 1 ) 3 bis 10^{o}, vorzugsweise 7^{o}, groß ist.

5. Klappgriff nach einem der vorhergehenden Ansprüche, dadurch gekennzeichnet,
daß für die beiden Enden des Griffbügels ( 1 ) je ein Schwenklager ( 4, 5 ) am Lagerbock ( 6 ) vorgesehen ist und
daß zwei Rückstellfedern ( 10, 11 ) vorgesehen sind, die als Schraubenfedern ausgebildet und auf den beiden Schwenklagern zugeordnete Schwenkachsen ( 8, 12 ) aufgesteckt sind.

6. Klappgriff nach Anspruch 5, dadurch gekennzeichnet,
daß die beiden Schwenkachsen ( 8, 12 ) drehsteif mit dem Griffbügel ( 1 ) verbunden sind,
daß als Bremsfeder eine Blattfeder ( 18 ) vorgesehen ist, die mit ihren beiden Enden an den einander zugekehrten Enden der Schwenkachsen drehsteif befestigt ist, und
daß im mittleren Längenbereich der Blattfeder am Lagerbock ( 6 ) befestigte Anschläge ( 20 - 24 ) vorgesehen sind, die dann und nur dann die Schwenkbewegung der Blattfeder behindern, wenn der Griffbügel eine Stellung im Bereich des Bremswinkels ( 25 ) einnimmt.

7. Klappgriff nach Anspruch 6, dadurch gekennzeichnet,
daß die Blattfeder ( 18 ) in ihrem mit den Anschlägen ( 20 - 24 ) zusammenwirkenden Bereich eine Verschränkung ( 30 ) aufweist, durch deren Ausmaß die Ruhestellung des Griffbügels der Krümmung der Montagewand entsprechend voreinstellbar ist.

## Claims

1. Tiltable grip having a grip handle which is articulated in a pivotable manner on a bearing block, which can be mounted on a mounting wall, and can be pivoted away, counter to the action of a restoring spring, from its rest position, in which it rests against the bearing block, into a functioning position [lacuna] from the bearing block through a grip angle delimited by stop [sic], characterized in that a braking spring (18) is provided, which is arranged to oppose the restoring spring (10, 11) and, in the rest position (14), just compensates for the restoring spring (10, 11), in that the rest position (14) differs from the end position (27), in which the grip handle (1) butts against the bearing block (6) or against the associated mounting wall (19) by a safety angle (26), the safety angle (26) being considerably smaller than the grip angle (15), and in that the braking spring (18) takes effect, to be precise to an increasing extent, only within the range of a braking angle (25) between a start-of-braking position (13) and the end position (27).

2. Tiltable grip, according to Claim 1, characterized in that the grip angle (15) is from 60 to 100^{o} (degrees), preferably 80^{o}.

3. Tiltable grip according to one of the preceding claims, characterized in that the braking angle (25) is from 10 to 25^{o} [sic], preferably 11^{o}.

4. Tiltable grip according to one of the preceding claims, characterized in that the safety angle (26) between the end position (27) and the rest position (14) of the grip handle (1) is from 3 to 10^{o}, preferably 7^{o}.

5. Tiltable grip according to one of the preceding claims, characterized in that in each case one pivot bearing (4, 5) is provided on the bearing block (6) for the two ends of the grip handle (1), and in that two restoring springs (10, 11) are provided, which are designed as helical springs and are fitted on pivot pins (8, 12) assigned to the two pivot bearings.

6. Tiltable grip according to Claim 5, characterized in that the two pivot pins (8, 12) are connected in a rotationally rigid manner to the grip handle (1), in that a leaf spring (18) is provided as the braking spring, the leaf spring being fastened in a rotationally rigid manner, by means of its two ends, on the mutually facing ends of the pivot pins, and in that stops (20 - 24) which are fastened on the bearing block (6) are provided in the central length region of the leaf spring, which stops obstruct the pivoting movement of the leaf spring when, and only when, the grip handle assumes a position within the range of the braking angle (25).

7. Pivotable grip according to Claim 6, characterized in that, in its region which interacts with the stops (20 - 24), the leaf spring (18) exhibits a twist (30), it being possible to preset the rest position of the grip handle in accordance with the curvature of the mounting wall as a result of the extent of said twist.

## Revendications

1. Poignée basculante comportant un étrier, qui est reliée de manière pivotante à un support de palier pouvant être monté sur une paroi de montage et que l'on peut faire pivoter contre la force d'un ressort de rappel, a partir du support de palier et sur un certain angle limité par une butée, de sa position de repos dans laquelle elle est appuyée contre le support de palier dans une position de fonctionnement, caractérisée en ce qu'est prévu un ressort de freinage (18) qui est disposé de manière a réagir contre le ressort de rappel (10, 11) et qui, en position de repos (14), compense juste le ressort de rappel (10, 11), en ce que la position de repos (14) s'écarte avec un angle de sécurité (26) de la position finale (27) dans laquelle l'étrier (1) est en butée contre le support de palier (6) ou contre la paroi de montage (9) qui y est associée, l'angle de sécurité (26) étant sensiblement inférieur à l'angle de la poignée (15), et en ce que le ressort de freinage (18) n'agit que dans la zone d'un angle de freinage (25) compris entre une position de début de freinage (13) et la position finale (27), et ce, de façon croissante.

2. Poignée basculante selon la revendication 1, caractérisée en ce que l'angle de la poignée (15) est compris entre 60 et 100^{o} et est, de préférence, de 80^{o}.

3. Poignée basculante selon l'une des revendications précédentes, caractérisée en ce que l'angle de freinage (25) est compris entre 10 et 25^{o} et est, de préférence, de 11^{o}.

4. Poignée basculante selon l'une des revendications précédentes, caractérisée en ce que l'angle de sécurité (26) entre la position finale (27) de l'étrier (1) et sa position de repos (14) est compris entre 3 et 10^{o} et est, de préférence, de 7^{o}.

5. Poignée basculante selon l'une des revendications précédentes, caractérisée en ce qu'un palier oscillant (4, 5) est prévu sur le support de palier (6) pour chacune des deux extrémités de l'étrier (1), et en ce que sont prévus deux ressorts de rappel (10, 11) qui sont réalisés sous la forme de ressorts à boudin et qui sont enfilés sur des axes de pivotement (8, 12) associés aux deux paliers oscillants.

6. Poignée basculante selon la revendication 5, caractérisée en ce que les deux axes de pivotement (8, 12) sont reliés à l'étrier (1) de façon rigide en torsion, en ce qu'est prévu en tant que ressort de freinage un ressort à lame (18) qui est fixé de façon rigide en torsion par ses deux extrémités aux extrémités des axes de pivotement qui se font face, et en ce que des butées (20-24) sont prévues sur le support de palier (6), dans la zone centrale de l'étendue longitudinale du ressort à lame, qui n'empêchent le ressort à lame de pivoter que lorsque l'étrier est dans une position située dans la zone de l'angle de freinage (25).

7. Poignée basculante selon la revendication 6, caractérisée en ce que le ressort à lame (18) présente dans sa zone coopérant avec les butées (20-24) une inclinaison (30) dont l'angle permet d'ajuster au préalable la position de repos de l'étrier conformément à la courbure de la paroi de montage.
